# NEUE EUROPÄISCHE PATENTSCHRIFT

(11) **EP 1 372 430 B2**
(45) Veröffentlichungstag und Bekanntmachung des Hinweises auf die Entscheidung über den Einspruch: **27.06.2018**
(45) Hinweis auf die Patenterteilung: 22.10.2014
(21) Anmeldenummer: 02727415.8
(22) Anmeldetag: 14.03.2002
(51) Int. Cl.: A46B 9/04

(54) **KOPFTEIL FÜR EINE ELEKTRISCHE ZAHNBÜRSTE**
HEAD PART FOR AN ELECTRIC TOOTHBRUSH
ELEMENT TETE POUR UNE BROSSE A DENTS ELECTRIQUE

(30) Priorität: 02.04.2001 US 824310
(43) Veröffentlichungstag der Anmeldung: 02.01.2004
(73) Patentinhaber: Braun GmbH, 61476 Kronberg (DE)
(72) Erfinder: BROWN, William, Jr., Peabody, MA 01960 (US); CHRISTMAN, Thomas, A., Lexington, MA 02420 (US); DRIESEN, Georges, 61276 Weilrod (DE); FRITSCH, Thomas, 65817 Eppstein (DE); ROBERTS, Michael, Brookfield, CT 06804 (US); SCHWARZ-HARTMANN, Armin, 55234 Wendelsheim (DE)
(74) Vertreter: Töpert, Verena Clarita
(86) Internationale Anmeldenummer: PCT/EP2002/002849
(87) Internationale Veröffentlichungsnummer: WO 2002/078490

(56) Entgegenhaltungen:
- EP-A- 0 449 655
- EP-A- 0 765 642
- EP-A2- 1 138 222
- WO-A-00/21406
- WO-A-01/14117
- WO-A-97/03587
- WO-A1-00//41592
- WO-A1-99//47021
- WO-A1-03//073958
- DE-U- 8 807 968
- US-A- 5 046 213
- US-A- 5 268 082
- US-A- 5 341 537
- US-A- 5 500 970
- US-A- 5 652 990
- US-A- 5 732 433
- US-A- 6 021 538
- US-A1-2001/0 023 516

## Beschreibung

Die Erfindung betrifft allgemein das Gebiet der Mundpflege und insbesondere Zahnbürsten. Speziell bezieht sich die Erfindung auf elektrische Zahnbürsten.

Elektrische Zahnbürsten sind bereits allgemein bekannt und seit Jahren im Handel erhältlich. Bei den üblichen elektrischen Bürsten sind sämtliche Borstenbüschel auf dem Bürstenkopf senkrecht zur Oberseite des Kopfes ausgerichtet. Die Borstenbüschel erfahren eine oszillierende, drehende und/oder translatorische Bewegung, um eine verbesserte Zahnreinigung zu erreichen.

Im deutschen Gebrauchsmuster 8807968.6 ist ein Kopfteil für eine elektrische Zahnbürste offenbart. Eine erste Gruppe kreisförmiger Borstenbüschel 18 ist in einem ersten Ring um den Drehmittelpunkt des Kopfteiles angeordnet. Eine zweite Gruppe größerer kreisförmiger Borstenbüschel ist in einem zweiten Ring angeordnet, der sich außerhalb des ersten Rings befindet und ebenfalls den Drehmittelpunkt des Kopfteiles umgibt. Die Borstenbüschel weisen alle einen kreisförmigen Querschnitt auf und erstrecken sich in einem spitzen Winkel zu einer Oberseite des Kopfteiles schräg von der Mitte des Kopfteiles weg.

Bei dieser Bürste besteht ein Problem darin, dass sämtliche Borstenbüschel einen kreisförmigen Querschnitt aufweisen. Borstenbüschel dieser Art sind nicht besonders effektiv beim Eindringen in Zahnzwischenräume oder Interdentalräume zu Reinigungszwecken. Ferner sind nahezu alle Borstenbüschel so angeordnet, dass sie sich in einem Winkel von der Mitte weg nach außen erstrecken. Im Gebrauch neigt eine solche Borstenanordnung dazu, sich stärker als beabsichtigt zu spreizen (flachgedrückt zu werden), wodurch sich Bürsteneigenschaften ergeben, die der einer abgenutzten Standardbürste entsprechen. Außerdem ist kein einziges der Borstenbüschel entlang der Richtung des Drehumfangs abgewinkelt, wodurch sich ein noch schlechteres Eindringen der Borsten in die Zahnzwischenräume ergibt.

Das Europäische Patent 0765642 offenbart ebenfalls ein Kopfteil für eine elektrische Zahnbürste. Dabei sind einige senkrecht zum Kopfteil ausgerichtete Borstenbüschel vorgesehen. Weitere Borstenbüschel sind um einen Außenring des kreisförmigen Kopfteiles positioniert und in einem spitzen Winkel entlang eines Umfangs einer Oberseite des Kopfteiles geneigt. Sämtliche Borstenbüschel auf dem Kopfteil weisen einen kreisförmigen Querschnitt auf.

Bei diesem Kopfteil tritt wieder das bekannte Problem eines Bürstenkopfs auf, bei dem alle Borstenbüschel einen kreisförmigen Querschnitt aufweisen: Borstenbüschel dieser Art dringen nur schlecht in die Interdentalräume ein. Dieses Kopfteil besitzt auch keine Borstenbüschel, die von der Mitte weg abgewinkelt sind, um im Mundraum am Zahnfleischsaum entlang zu streichen. Auch bleibt aufgrund der Konfiguration und Formgestaltung der Borstenbüschel ein erheblicher Anteil des auf dem Kopfteil verfügbaren Raums ungenutzt. Dadurch wird die Wirksamkeit verringert und der Verschleiß des Kopfteiles (durch Spreizen) bei Gebrauch beschleunigt. Um ein wirksames Putzen zu erreichen, sollten etwa 32 bis 36% der Kopfoberseite mit Borstenbüscheln/Borsten besetzt sein.

Aufgabe der vorliegenden Erfindung ist es, eines oder mehrere der vorstehend genannten Probleme zu lösen. Dies wird durch die Merkmale des Anspruchs 1 gelöst. Gemäß der Erfindung weist ein Kopfteil für eine elektrische Zahnbürste ein Trägerteil und eine Vielzahl von Borstenbüscheln auf, die an ihrem unteren Ende von dem Trägerteil gehalten sind. Zwei der Borstenbüschel sind an ihren unteren Enden einander benachbart und in einem spitzen Winkel zum Trägerteil von einander weg geneigt.

Das Kopfteil für eine elektrische Zahnbürste weist ein Trägerteil und eine Vielzahl von Bortenbüscheln auf, die an ihrem unteren Ende von dem Trägerteil gehalten werden. Das Trägerteil hat eine im wesentlichen kreisförmige Oberfläche, aus der die Borstenbüschel herausragen. Ein erstes Borstenbüschel ist entlang eines gedachten Rasius' geneigt, der von einer Mitte der kreisförmigen Oberfläche ausgeht und durch ein unteres Ende des ersten Borstenbüschels verläuft. In Kombination ist ein zweites Borstenbüschel entlang eines gedachten Umfangs geneigt, der die Mitte der kreisförmigen Oberfläche umgibt und durch ein unteres Ende des zweiten Borstenbüschels verläuft.

Folgende Merkmale der Offenbarung werden insbesondere, jedoch nicht ausschließlich, sowie für sich oder in Kombination gesehen, als bedeutsam für die Erfindung herausgestellt:
A.) Kopfteil für eine elektrische Zahnbürste, mit einem Trägerteil und einer Vielzahl von Borstenbüscheln, die an ihrem unteren Ende von dem Trägerteil gehalten sind, wobei zwei der Borstenbüschel an ihren unteren Enden einander benachbart und in einem spitzen Winkel zum Trägerteil von einander weg geneigt sind und/oder Kopfteil, wobei mindestens eines der beiden Borstenbüschel einen nicht runden Querschnitt aufweist und/oder Kopfteil, wobei mindestens eines der beiden Borstenbüschel einen ovalen Querschnitt aufweist und/oder Kopfteil, wobei in der Vielzahl von Borstenbüscheln ein drittes Borstenbüschel enthalten ist, das sich im Querschnitt von den beiden Borstenbüscheln unterscheidet und/oder Kopfteil, wobei auch das dritte Borstenbüschel in einem spitzen Winkel zum Trägerteil geneigt ist.
B.) Kopfteil für eine elektrische Zahnbürste, mit einem Trägerteil und einer Vielzahl von Borstenbüscheln, die an ihrem unteren Ende von dem Trägerteil gehalten werden, wobei das Trägerteil eine im wesentlichen kreisförmige Oberfläche aufweist, aus der die Borstenbüschel herausragen, ein erstes Borstenbüschel entlang eines gedachten Radius' radial nach außen zum Rand des Trägerteils oder radial nach innen zum Zentrum des Trägerteils geneigt ist, der von einer Mitte der kreisförmigen Oberfläche ausgeht und durch ein unteres Ende des ersten Borstenbüschels verläuft und ein zweites Borstenbüschel entlang eines gedachten Umfangs oder eines zum Zentrum des Trägerteils konzentrischen Kreisringes geneigt ist, der die Mitte der kreisförmigen Oberfläche umgibt und durch ein unteres Ende des zweiten Borstenbüschels verläuft und/oder Kopfteil, wobei ein unteres Ende des ersten Borstenbüschels näher zur Mitte der kreisförmigen Oberfläche liegt als ein unteres Ende des zweiten Borstenbüschels und/oder Kopfteil, wobei das erste und zweite Borstenbüschel in unterschiedlichen Winkeln zur kreisförmigen Oberfläche geneigt sind und/oder Kopfteil, wobei mindestens eines der ersten und zweiten Borstenbüschel einen nicht runden Querschnitt aufweist und/oder Kopfteil , wobei mindestens eines der ersten und zweiten Borstenbüschel einen ovalen Querschnitt aufweist.
C.) Kopfteil für eine elektrische Zahnbürste, mit einem Trägerteil; und einer Vielzahl von Borstenbüscheln, die an ihrem unteren Ende von dem Trägerteil gehalten werden, wobei ein Borstenbüschelpaar in im wesentlichen gleicher Richtung bezüglich des Trägerteils geneigt ist und ein erstes Borstenbüschel des Paars einen zum Querschnitt eines zweiten Borstenbüschels des Paars unterschiedlichen Querschnitt aufweist und/oder Kopfteil, wobei die Länge des ersten Borstenbüschels sich von der des zweiten Borstenbüschels unterscheidet und/oder Kopfteil, das ferner ein drittes Borstenbüschel aufweist, das gegenüber dem Trägerteil geneigt angeordnet ist und dessen Länge sich von der des ersten und zweiten Borstenbüschels unterscheidet und/oder Kopfteil, wobei die Anzahl der Borsten des ersten Borstenbüschels von der des zweiten Borstenbüschels unterschiedlich ist und/oder Kopfteil, wobei das erste und das zweite Borstenbüschel von unterschiedlicher Länge sind und/oder Kopfteil, das ferner ein drittes Borstenbüschel aufweist, dessen Neigungswinkel sich von dem des ersten und zweiten Borstenbüschels unterscheidet.
D.) Kopfteil für eine elektrische Zahnbürste, mit einem Borstenbüschel, dessen Querschnitt nicht rund ausgebildet ist und/oder Kopfteil, wobei das Borstenbüschel einen ovalen Querschnitt aufweist und/oder Kopfteil, wobei das Borstenbüschel in einem spitzen Winkel zu einer Oberfläche des Kopfteils geneigt ist, aus der das Borstenbüschel herausragt und/oder Kopfteil, das ferner ein weiteres Borstenbüschel umfasst, wobei die beiden Borstenbüschel sich in mindestens einem Merkmal aus der Merkmalsgruppe Länge, Querschnittsform, Farbe, Materialzusammensetzung, Anzahl von Filamenten, Art der Extrusion und Neigungswinkel voneinander unterscheiden und/oder Kopfteil, das ferner ein zweites Borstenbüschel mit einem runden Querschnitt aufweist und/oder Kopfteil, wobei das rund geformte Borstenbüschel senkrecht zu einer Oberfläche des Kopfteils, aus der es herausragt, angeordnet ist, und das andere Borstenbüschel in einem spitzen Winkel zu dieser Oberfläche ausgerichtet ist und/oder Kopfteil, wobei das rund geformte Borstenbüschel in einem spitzen Winkel zu einer Oberfläche des Kopfteils, aus dem es herausragt, angeordnet ist und das andere Borstenbüschel senkrecht zu dieser Oberfläche ausgerichtet ist und/oder Kopfteil, das ferner ein drittes Borstenbüschel umfasst, wobei die drei Borstenbüschel unterschiedliche Längen aufweisen, die im Bereich von ca. 6,7 mm bis ca. 8,6 mm liegen und/oder Kopfteil, wobei mindestens einige der Borsten einen Durchmesser zwischen ca. 5,5 mil und ca. 6,5 mil aufweisen.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen.

Es zeigen:
- Fig. 1: zeigt eine Seitenansicht eines Teils einer elektrischen Zahnbürste;
- Fig. 2: zeigt eine Explosionsdarstellung der Ansicht nach Fig. 1;
- Fig. 3: zeigt eine Draufsicht in Pfeilrichtung 3 nach Fig. 1;
- Fig. 4: zeigt eine Seitenansicht eines Kissens, eines Trägerteils und eines Borstenbüschels der Zahnbürste nach Fig. 1;
- Fig. 5: zeigt eine perspektivische Ansicht eines zweiten Ausführungsbeispiels eines Kopfteils für eine elektrische Zahnbürste;
- Fig. 6: zeigt eine vergrößerte Draufsicht auf das Kopfteil nach Fig. 5;
- Fig. 7: zeigt eine Schnittansicht des Kopfteils aus Fig. 6 entlang der Linie A-A;
- Fig. 8: zeigt eine Schnittansicht des Kopfteils aus Fig. 6 entlang der Linie B-B; und
- Fig. 9: zeigt eine Schnittansicht des Kopfteils aus Fig. 6 entlang der Linie D-D.

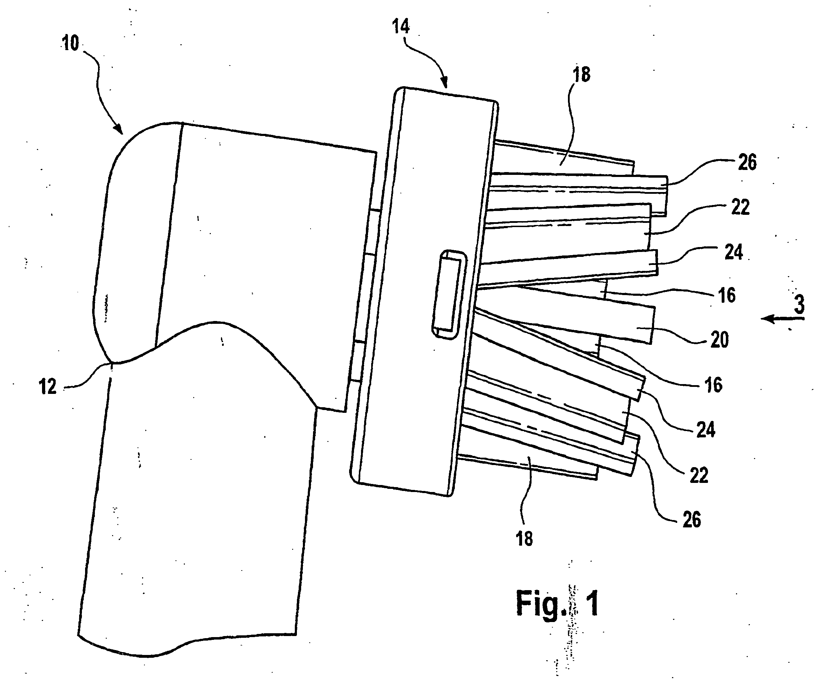

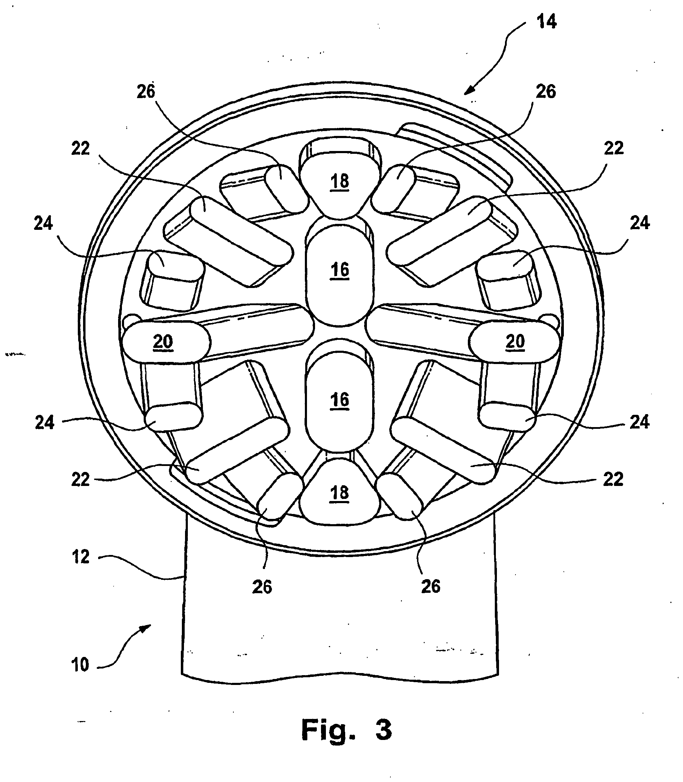

In den Figuren 1 bis 3 weist eine elektrische Zahnbürste 10 ein Halsteil 12 und ein Kopfteil 14 auf. Wie aus dem Stand der Technik hinreichend bekannt, führt das Kopfteil 14 eine Oszillationsbewegung um einen Winkel von vorzugsweise ± 20 bis 50 Grad um eine parallel zu einem Pfeil 3 verlaufende Achse aus. Die elektrische Stromversorgung erfolgt vorzugsweise über wiederaufladbare oder nicht wiederaufladbare Batterien. Die Batterien treiben einen Elektromotor an, der über ein Getriebe oder ein sonstiges Kopplungselement das Kopfteil in Oszillationsbewegung versetzt. Weitere Einzelheiten zur Art und Weise der Oszillationsbewegung des Kopfteils sind an dieser Stelle nicht aufgeführt, da die Erfindung nicht auf diese Bürstenausbildung ausgerichtet ist.

Das Kopfteil 14 enthält eine Vielzahl an Borstenbüscheln unterschiedlicher Längen, Querschnitte und Ausrichtungen. Obwohl in der Zeichnung jedes Borstenbüschel als feste Masse dargestellt ist, bestehen die Borstenbüschel in Wirklichkeit aus einer großen Masse einzelner Kunststoffborsten. Die Borsten sind vorzugsweise aus Nylon 612 gefertigt. Die Borstenbüschel 16 weisen jeweils einen ovalen Querschnitt bei einer Höhe von 6,1 mm auf. Die Abmessungen des Ovals betragen 1,78 mm x 3,05 mm. Für das Borstenbüschel 16 können Filamente einer Stärke von 5 oder 6 mil verwendet werden. Das Borstenbüschel 16 ist senkrecht zur Oberseite des Kopfteils ausgerichtet.

Die Borstenbüschel 18 weisen jeweils einen Dreiecksquerschnitt mit verrundeten Ecken auf (Form eines Dreieck-Ovals). Diese Borstenbüschel sind 6,35 mm hoch, wobei der Abstand von dem der Mitte des Kopfteils zugewandten verrundeten Scheitelpunkt zur gegenüberliegenden Seite 2,03 mm beträgt. Ferner weisen die Borstenbüschel 18 einen Abstand von 2,28 mm zwischen den beiden übrigen verrundeten Scheitelpunkten auf. Für die Borsten dieses Borstenbüschels werden vorzugsweise Filamente einer Stärke von 6 mil verwendet. Das Borstenbüschel 18 ist senkrecht zur Oberseite des Kopfteils ausgerichtet.

Die Borstenbüschel 20 weisen alle einen ovalen Querschnitt bei einer Höhe von 7,62 mm auf. Die Abmessungen des Ovals betragen 1,27 mm x 2,28 mm. Für die Borstenbüschel 20 können Filamente einer Stärke von 6 mil verwendet werden. Das Borstenbüschel 20 ist in einem Winkel von etwa 20 Grad zur Oberseite des Kopfteils von der Mitte des Kopfteils weg nach außen geneigt. Die Längserstreckung des ovalen Querschnitts liegt entlang der Neigungsrichtung des Borstenbüschels 20.

Die Borstenbüschel 22 weisen alle einen ovalen Querschnitt bei einer Höhe von 7,37 mm auf. Die Abmessungen des Ovals betragen 0,76 mm x 3,05 mm. Für die Borstenbüschel 22 können Filamente einer Stärke von 6 mil verwendet werden. Das Borstenbüschel ist entlang einer gedachten kreisförmigen Linie geneigt, deren Mittelpunkt zur Mitte des Kopfteils konzentrisch ist. Der Neigungswinkel zur Oberseite des Kopfteils beträgt etwa 20 Grad. Die Längserstreckung des ovalen Querschnitts ist im wesentlichen zur Mitte des Kopfteils hin ausgerichtet.

Die Borstenbüschel 24 weisen alle einen ovalen Querschnitt bei einer Höhe von 7,62 mm auf. Die Abmessungen des Ovals betragen 0,76 mm x 1,52 mm. Für die Borstenbüschel 24 können Filamente einer Stärke von 6 mil verwendet werden. Das Borstenbüschel ist entlang einer gedachten kreisförmigen Linie geneigt, deren Mittelpunkt zur Mitte des Kopfteils konzentrisch ist. Der Neigungswinkel zur Oberseite des Kopfteils beträgt etwa 12 Grad. Die Längserstreckung des ovalen Querschnitts ist im wesentlichen zur Mitte des Kopfteils hin ausgerichtet.

Die Borstenbüschel 26 weisen alle einen ovalen Querschnitt bei einer Höhe von 8,4 mm auf. Die Abmessungen des Ovals betragen 0,76 mm x 1,52 mm. Für die Borstenbüschel 26 können Filamente einer Stärke von 6 mil verwendet werden. Das Borstenbüschel ist entlang einer gedachten kreisförmigen Linie geneigt, deren Mittelpunkt zur Mitte des Kopfteils konzentrisch ist. Der Neigungswinkel zur Oberseite des Kopfteils beträgt etwa 12 Grad. Die Längserstreckung des ovalen Querschnitts ist im wesentlichen zur Mitte des Kopfteils hin ausgerichtet.

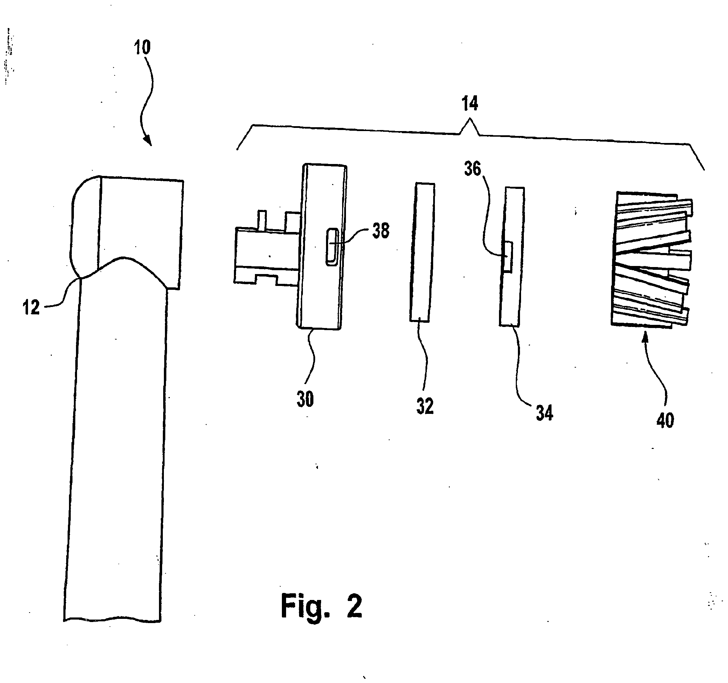

Bezugnehmend auf Fig. 2 wird nun das Kopfteil 14 ausführlicher beschrieben. Ein aus Kunststoff gefertigtes Fußteil 30 ist im Halsteil 12 gelagert und wird von einem Getriebe oder einem sonstigen Antriebselement (nicht dargestellt) so angetrieben, dass es das Kopfteil in eine oszillierende Bewegung versetzt. Ein aus einem thermoplastischen Elastomer bestehendes federndes Kissen 32 ist im innern des Fußteils 30 angeordnet. In einem Kunststoff-Trägerteil 34 sind mehrere Durchgangsbohrungen vorgesehen, die in Anzahl und Form der Anzahl und Form sämtlicher Borstenbüschel entsprechen. Fußteil und Trägerteil können aus Delrin gefertigt sein. Das Kissen 32 kann aus GLS Dynaflex G 6703 bestehen.

Im Trägerteil 34 ist ein Rastelementepaar 36 (von dem nur ein Rastelement sichtbar ist) vorgesehen, das in ein Paar Öffnungen 38 im Fußteil 38 eingreift, um das Trägerteil über eine Schnappverbindung am Fußteil zu befestigen, so dass das Kissen 32 zuverlässig dazwischen festgehalten wird. Borstenbüschel 40 sind an ihren unteren Enden vom Trägerteil gehalten. Die unteren Enden der Borstenbüschel sind in Fig. 2 nicht dargestellt, werden jedoch nachstehend noch ausführlicher beschrieben.

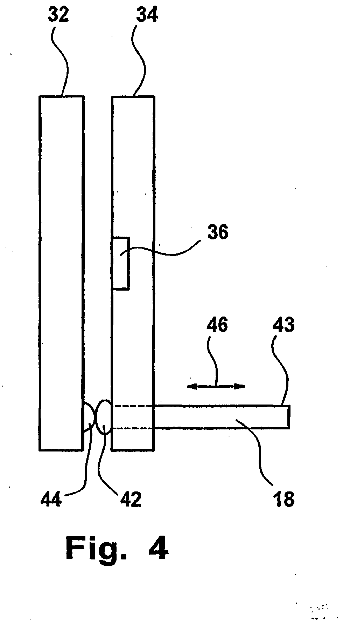

Fig. 4 zeigt das Kissen 32 benachbart zum Trägerteil 34. Nur eines der Borstenbüschel 18 ist dargestellt. Das der Putzflächenseite entgegengesetzte Ende des Borstenbüschels 18 ist zu einer Masse 42 verschmolzen. Diese Masse 42 verhindert, dass das Borstenbüschel 18 aus seiner Bohrung herausgezogen werden kann, wenn auf die Putzflächenseite 43 des Borstenbüschels eine entlang einer Längsachse des Borstenbüschels wirkende Zugkraft ausgeübt wird. Auf dem Kissen 32 ist ein zylinderförmiger Vorsprung 44 vorgesehen, der mit der Masse 42 in Berührkontakt steht. Für jedes Borstenbüschel der Bürste ist mindestens ein solcher Vorsprung vorgesehen.

Wird das Ende 43 des Borstenbüschels 18 entlang der Längsachse des Borstenbüschels mit einer Druckkraft beaufschlagt, kann sich das Borstenbüschel in seiner Bohrung in einer ersten Richtung 46 auf das Kissen zu bewegen. Dabei verhält sich der Vorsprung 44 wie eine Feder, die aufgrund der auf sie von der Masse 42 ausgeübten Kraft zusammengedrückt wird. Wird die Druckkraft entfernt, kehrt der Vorsprung zu seiner ursprünglichen Form zurück und bewegt dabei das Borstenbüschel 18 in seiner Bohrung in eine zweite Richtung, die im wesentlichen der ersten Richtung entgegengesetzt ist. Dieser Vorgang trägt dazu bei, Zahnfleischverletzungen zu verhindern, falls während des Zähneputzens ein zu hoher Druck ausgeübt wird.

Als Alternative hierzu kann die Masse 42 auch im Trägerteil 34 festgehalten werden, während das Trägerteil durch Spritzgießen geformt wird (dieses Verfahren ist unter dem Begriff "hot tufting" - Heißstopfen - bekannt). In diesem Fall ist kein Kissen 32 erforderlich. Nach einer weiteren Alternative wird das Trägerteil 34 mittels Ultraschallschweißen mit dem Fußteil 30 verschweißt, nachdem die Borstenbüschel am Fußteil 34 befestigt sind. Rastelemente 36 und Öffnungen 38 entfallen in diesem Fall.

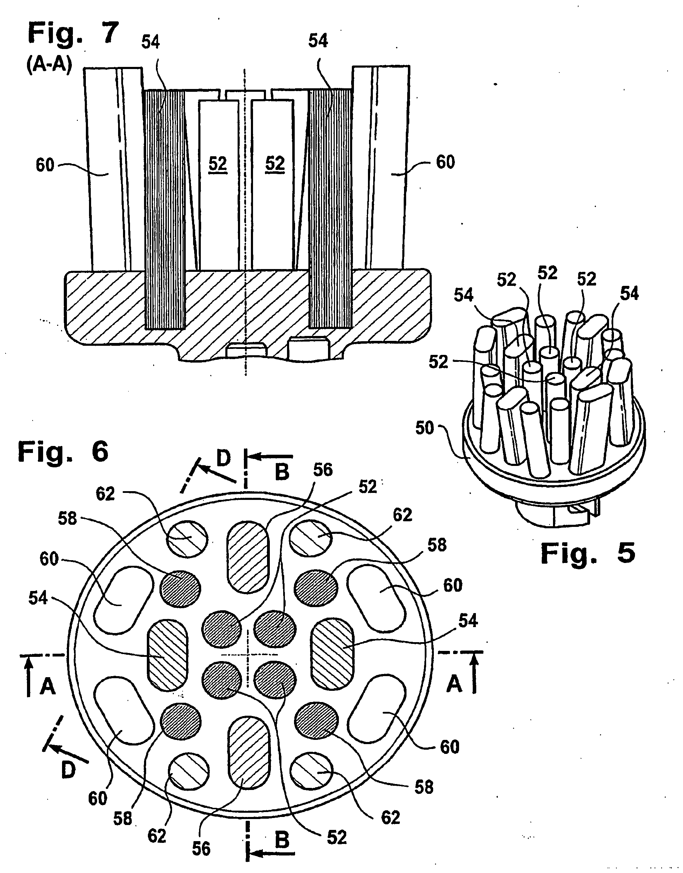

Ein zweites Ausführungsbeispiel eines Kopfteils für eine elektrische Zahnbürste wird nun in Verbindung mit den Figuren 5 bis 9 beschrieben. Ein Kopfteil (Trägerteil) 50 trägt eine Vielzahl von Borstenbüscheln. Die Borsten weisen alle einen Durchmesser von etwa 6 mil (1 mil ≈0,0254 mm) auf. Selbstverständlich können auch Filamente mit unterschiedlichen Durchmessern verwendet werden (z.B. 6,0 ± 0,5 mil).

Eine erste Gruppe von Borstenbüscheln 52 weist einen runden Querschnitt auf und erstreckt sich senkrecht vom Kopfteil 50 weg. Jedes Borstenbüschel enthält etwa 54 Borsten. Die Borstenbüschel 52 ragen um etwa 0,7 mm aus dem Kopfteil (Länge der Borstenbüschel) und enthalten vorzugsweise aus Bifilamenten gebildete Borsten. Borsten dieser Art werden aus zwei unterschiedlichen Werkstoffen, z.B. Nylon 6.12 und Nylon 6.10, koextrudiert und werden bei Berührung mit Wasser biegsam. Alle in Zusammenhang mit diesem Ausführungsbeispiel erwähnten Werkstoffe aus Nylon sind vorzugsweise Polyamide. Nähere Einzelheiten zu solchen Bifilament-Borsten sind der PCT-Anmeldung mit der Veröffentlichungsnummer WO 98/14092 zu entnehmen.

Eine zweite Gruppe von Borstenbüscheln 54 ist ovalförmig ausgebildet (d.h. rippenförmig) und erstreckt sich ebenfalls senkrecht vom Kopfteil 50 weg. Die Filamente dieses Borstenbüschels sind aus einem einzigen Werkstoff wie Nylon 6.12 extrudiert. Die Borstenbüschel 54 ragen um etwa 7,4 mm aus dem Kopfteil. In jedem Borstenbüschel 54 sind etwa 108 Borsten enthalten.

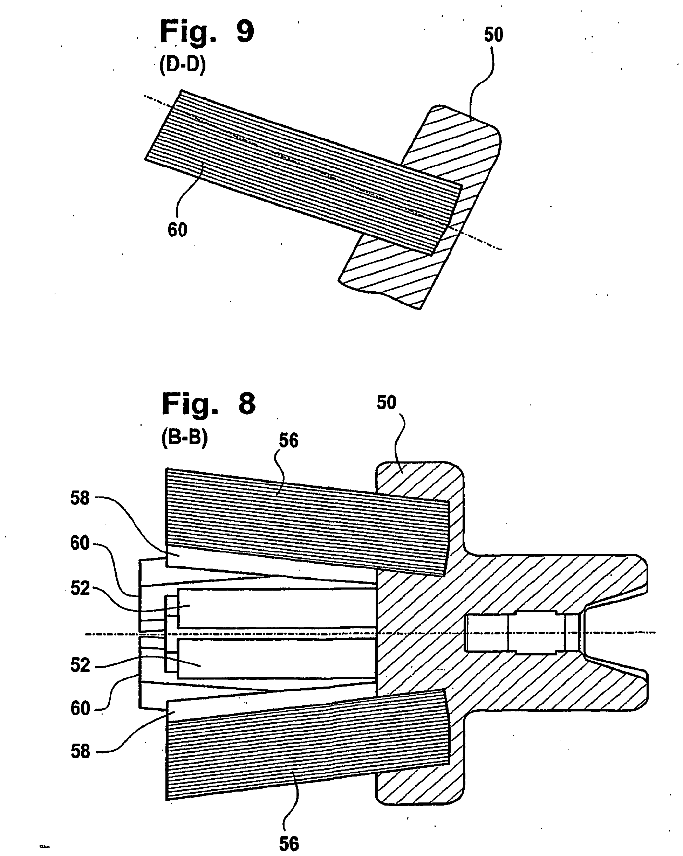

Eine dritte Gruppe von Borstenbüscheln 56 ist ebenfalls ovalförmig ausgebildet und ragt um etwa 7,4 mm aus dem Kopfteil 50 heraus. Die Borstenbüschel 56 bestehen vorzugsweise aus Nylon 6.12, wobei jedes Borstenbüschel etwa 108 Borsten umfasst. Die Borstenbüschel 56 sind um etwa 6 Grad von der Vertikalen weg geneigt, und zwar in radialer Richtung von der Mitte des Kopfteils weg nach außen (siehe Fig. 8).

Eine vierte Gruppe von Borstenbüscheln 58 weist einen runden Querschnitt auf und ragt um etwa 7,4 mm aus dem Kopfteil 50 heraus. Die Borsten dieser Gruppe sind aus zwei verschiedenen Werkstoffen koextrudiert, z.B. Nylon 6.12 und Nylon 6.10, und werden bei Kontakt mit Wasser biegsam. Jedes Borstenbüscheln enthält etwa 54 Borsten. Die Borstenbüschel 58 sind um etwa 7,5 Grad von der Vertikalen weg geneigt, und zwar in radialer Richtung von der Mitte des Kopfteils weg nach außen (siehe Fig. 8).

Eine fünfte Gruppe von Borstenbüscheln 60 weist einen ovalen Querschnitt auf und ragt um etwa 8,3 mm aus dem Kopfteil 50 heraus. Die Borstenbüschel 60 bestehen vorzugsweise aus Nylon 6.12, wobei jedes Borstenbüschel etwa 108 Borsten umfasst. Die Borstenbüschel 60 sind um etwa 7,5 Grad von der Vertikalen weg geneigt, und zwar in tangentialer Richtung (d.h. Umfangsrichtung). Jedes Borstenbüschel 60 ist zu seinem unmittelbar benachbarten Borstenbüschel 60 hin geneigt (siehe Fig. 8), was den Borstenbüscheln höhere Stabilität verleiht, da die so gepaarten Borstenbüschel einander während des Putzvorgangs abstützen. Dies trägt außerdem dazu bei, dass bei diesen Borstenbüscheln ein geringerer Borstenverschleiß auftritt.

Schließlich weist eine sechste Gruppe von Borstenbüscheln 62 einen runden Querschnitt auf und ragt um etwa 7,4 mm aus dem Kopfteil 50 heraus. Die Borstenbüschel 62 bestehen vorzugsweise aus Nylon 6.12, wobei jedes Borstenbüschel etwa 54 Borsten umfasst. Die Borstenbüschel 62 sind um etwa 6 Grad von der Vertikalen weg geneigt, und zwar in tangentialer Richtung (d.h. Umfangsrichtung). Jedes Borstenbüschel 62 ist zu seinem unmittelbar benachbarten Borstenbüschel 62 hin geneigt (siehe Fig. 5).

Die Verrundung der Borstenenden erfolgt nach Befestigung der Borsten im Kopfteil. Für die betreffenden Borstenbüschel ist dabei der Neigungswinkel weg von der Vertikalen auf 7,5 Grad begrenzt, um eine optimale Endenverrundung zu erreichen. Zur Befestigung der einzelnen Borstenbüschel oder Segmente am Kopfteil unter einem Neigungswinkel von bis zu 7,5 Grad können herkömmliche Drahtankerverfahren verwendet werden. Sofern ein Neigungswinkel von mehr als 7,5 Grad erwünscht ist, ist für das Drahtankerwerkzeug zusätzlicher Bewegungsspielraum erforderlich (in diesem Fall wird das Verrunden der Enden weniger gut ausfallen).

Die Borstenbüschel 56 und 60 umfassen vorzugsweise blaue oder grüne Borsten zur Anzeige des Abnutzungsgrades. wie im einzelnen in der U.S. Patentschrift 4 802 255 beschrieben. Die ovalförmigen Borstenbüschel 54, 56 und 60 bestehen im Grunde aus zwei Gruppen von Borsten. Die ovale Form sorgt für erhöhte Steifigkeit dieser Borstenbüschel und ermöglicht ein besseres Eindringen in Zahnzwischenräume als dies bei kreisförmigen Borstenbüscheln der Fall ist. Die ovalförmigen Borstenbüschel haben alle Abmessungen von etwa 1,45 mm x 2,9 mm. Die Borstenbüschel mit runden Querschnitten weisen alle einen Durchmesser von etwa 1,5 mm auf. Das Kopfteil 50 hat einen Durchmesser von ca. 13,25 mm. Nach einem alternativen Ausführungsbeispiel bewegt sich die Länge (der Betrag, um den sie aus dem Kopfteil herausragen) aller Borstenbüschel auf dem Kopfteil im Bereich zwischen ca. 6,7 mm und ca. 8,6 mm.

Die vorliegende Erfindung ist vorstehend unter Bezugnahme auf bevorzugte Ausführungsbeispiele beschrieben. Es können jedoch von einem Durchschnittsfachmann ohne weiteres Abwandlungen und Änderungen vorgenommen werden, ohne dass er dabei der Rahmen der Erfindung überschreitet.

### Bezugszeichenliste

- 3: Pfeil
- 10: elektrische Zahnbürste
- 12: Halsteil
- 14,50: Kopfteil
- 16,18,22,26,40;: Borstenbüschel
- 52,54,56,58,60,62 30: Fußteil
- 32: Kissen
- 34: Trägerteil
- 36: Rastelement
- 38: Öffnung
- 42: Masse
- 43: Putzflächenseite
- 44: Vorsprung
- 46: Richtung

## Patentansprüche

1. Angetriebenes Kopfteil (14, 50) einer elektrischen Zahnbürste (10), mit einem Trägerteil (34) mit einer kreisförmigen Oberfläche und einer Mehrzahl von Borstenbüscheln (16-40; 52-62), die an ihrem unteren Ende von dem Trägerteil (34) gehalten sind, **dadurch gekennzeichnet, dass** zwei der Borstenbüschel (60, 62, 20, 56, 58) an ihren unteren Enden einander benachbart sind und in einem spitzen Winkel zum Trägerteil (34) von einander weg geneigt sind, wobei das zweite der beiden benachbarten Borstenbüschel (60, 62) in tangentialer Richtung entlang einer gedachten Umfangslinie geneigt ist, die die Mitte der kreisförmigen Oberfläche umgibt und durch ein unteres befestigungsseitiges Ende des Borstenbüschels (60, 62) verläuft und wobei mindestens eines der beiden benachbarten Borstenbüschel (60, 62) einen nicht runden Querschnitt aufweist, und wobei das erstes Borstenbüschel (20, 56, 58) entlang eines gedachten Radius, der von einer Mitte der kreisförmigen Oberfläche ausgeht und durch das untere Ende des ersten Borstenbüschels verläuft, geneigt ist.

2. Kopfteil nach Anspruch 1, wobei in der Mehrzahl von Borstenbüscheln (16-40; 52-62) ein weiteres Borstenbüschel (18) enthalten ist, das sich im Querschnitt von den beiden benachbarten Borstenbüscheln (24; 60,62) unterscheidet und bevorzugt Dreiecksquerschnitt und verrundete Ecken aufweist.

3. Kopfteil (14, 50) nach einem der vorhergehenden Ansprüche, wobei das Trägerteil eine kreisförmige Oberfläche aufweist, aus der die Borstenbüschel (16-40; 52-62) herausragen, wobei ein erstes Borstenbüschel (20; 56, 58) entlang eines gedachten Radius, der von einer Mitte der kreisförmigen Oberfläche ausgeht und durch das untere Ende des ersten Borstenbüschels verläuft nach aussen geneigt ist.

4. Kopfteil nach Anspruch 3, wobei das untere Ende des ersten Borstenbüschels (58) näher zur Mitte der kreisförmigen Oberfläche liegt als ein unteres Ende eines zweiten Borstenbüschels (60, 62).

5. Kopfteil nach einem der vorhergehenden Ansprüche, wobei zwei Borstenbüschel in unterschiedlichen Winkeln zur kreisförmigen Oberfläche geneigt sind.

6. Kopfteil nach einem der vorhergehenden Ansprüche, wobei mindestens eines der Borstenbüschel einen nicht runden, bevorzugt im wesentlichen ovalen Querschnitt aufweist.

7. Kopfteil nach einem der vorhergehenden Ansprüche, wobei die Länge des ersten Borstenbüschels sich von der des zweiten Borstenbüschels unterscheidet.

8. Kopfteil nach einem der vorhergehenden Ansprüche, mit einem dritten Borstenbüschel, das gegenüber dem Trägerteil (34) geneigt angeordnet ist und dessen Länge sich von der des ersten und zweiten Borstenbüschels unterscheidet.

9. Kopfteil nach einem der vorhergehenden Ansprüche, wobei die Anzahl der Borsten des ersten Borstenbüschels von der des zweiten Borstenbüschels unterschiedlich ist.

10. Kopfteil nach einem der vorhergehenden Ansprüche, wobei das erste und das zweite Borstenbüschel von unterschiedlicher Länge sind.

11. Kopfteil nach einem der vorhergehenden Ansprüche, mit einem dritten Borstenbüschel, dessen Neigungswinkel sich von dem des ersten und zweiten Borstenbüschels unterscheidet.

12. Kopfteilnach einem der vorhergehenden Ansprüche, mit wenigstens einem Borstenbüschel, dessen Querschnitt nicht rund ausgebildet ist.

13. Kopfteil nach Anspruch 12, wobei das Borstenbüschel einen ovalen Querschnitt aufweist.

14. Kopfteil nach einem der vorhergehenden Ansprüche, wobei die beiden Borstenbüschel sich in mindestens einem Merkmal aus der Merkmalsgruppe Länge, Querschnittsform, Farbe, Materialzusammensetzung, Anzahl von Filamenten, Art der Extrusion und Neigungswinkel voneinander unterscheiden.

15. Kopfteil nach einem der vorhergehenden Ansprüche, wobei ein zweites Borstenbüschel einen runden Querschnitt aufweist.

16. Kopfteil nach Anspruch 15, wobei das rund geformte Borstenbüschel senkrecht zu einer Oberfläche des Kopfteils, aus der es herausragt, angeordnet ist, und das andere Borstenbüschel in einem spitzen Winkel zu dieser Oberfläche ausgerichtet ist.

17. Kopfteil nach einem der vorhergehenden Ansprüche, mit einem dritten Borstenbüschel, wobei die drei Borstenbüschel unterschiedliche Längen aufweisen, die im Bereich von ca. 6,7 mm bis ca. 8,6 mm liegen.

18. Kopfteil nach einem der vorhergehenden Ansprüche, wobei mindestens einige der Borsten einen Durchmesser zwischen ca. 5,5 mil und ca. 6,5 mil aufweisen.

## Claims

1. Driven head section (14, 50) of an electric toothbrush (10), having a supporting section (34) with a circular surface and a plurality of bristle bundles (16-40; 52-62), which are held at their lower end by the supporting section (34), **characterized in that** two of the bristle bundles (60, 62, 20, 56, 58) are adjacent to one another at their lower ends and are tilted away from one another at an acute angle to the supporting section (34), wherein the second of the two adjacent bristle bundles (60, 62) is tilted in a tangential direction along an imaginary line of circumference, which surrounds the center of the circular surface and runs through a lower end of the bristle bundle (60, 62) on the attachment side, and wherein at least one of the two adjacent bristle bundles (60, 62) has a non-circular cross-section, and wherein the first bristle bundle (20, 56, 58) is tilted along an imaginary radius, which extends from a center of the circular surface and runs through the lower end of the first bristle bundle.

2. Head section according to claim 1, wherein in the plurality of bristle bundles (16-40; 52-62) a further bristle bundle (18) is contained, the cross-section of which differs from those of the two adjacent bristle bundles (24; 60,62) and preferably has a triangular cross-section and rounded corners.

3. Head section (14, 50) according to one of the preceding claims, wherein the supporting section has a circular surface from which the bristle bundles (16-40; 52-62) project, wherein a first bristle bundle (20; 56, 58) is tilted outwards along an imaginary radius which extends from a center of the circular surface and runs through the lower end of the first bristle bundle.

4. Head section according to claim 3, wherein the lower end of the first bristle bundle (58) is located closer to the center of the circular surface than a lower end of a second bristle bundle (60, 62).

5. Head section according to one of the preceding claims, wherein two bristle bundles are tilted at different angles to the circular surface.

6. Head section according to one of the preceding claims, wherein at least one of the bristle bundles has a non-circular, preferably essentially oval, cross-section.

7. Head section according to one of the preceding claims, wherein the length of the first bristle bundle differs from that of the second bristle bundle.

8. Head section according to one of the preceding claims, with a third bristle bundle which is arranged tilted with respect to the supporting section (34) and the length of which differs from that of the first and second bristle bundle.

9. Head section according to one of the preceding claims, wherein the number of bristles of the first bristle bundle differs from that of the second bristle bundle.

10. Head section according to one of the preceding claims, wherein the first and the second bristle bundle are of different lengths.

11. Head section according to one of the preceding claims, with a third bristle bundle, the angle of inclination of which differs from that of the first and second bristle bundle.

12. Head section according to one of the preceding claims, with at least one bristle bundle, the cross-section of which is not circular in shape.

13. Head section according to claim 12, wherein the bristle bundle has an oval cross-section.

14. Head section according to one of the preceding claims, wherein the two bristle bundles differ from one another in at least one feature from the group of features comprising length, cross-sectional shape, color, material composition, number of filaments, type of extrusion and angle of inclination.

15. Head section according to one of the preceding claims, wherein a second bristle bundle has a circular cross-section.

16. Head section according to claim 15, wherein the circularly shaped bristle bundle is arranged perpendicularly to a surface of the head section from which it projects, and the other bristle bundle is oriented at an acute angle to this surface.

17. Head section according to one of the preceding claims, with a third bristle bundle, wherein the three bristle bundles have different lengths, which are in the range of approximately 6.7 mm to approximately 8.6 mm.

18. Head section according to one of the preceding claims, wherein at least some of the bristles have a diameter of between approximately 0.14 mm (5.5 mil) and approximately 0.16 mm (6.5 mil).

## Revendications

1. Élément tête propulsé (14, 50) d'une brosse à dents électrique (10), comprenant un élément support (34) ayant une surface circulaire et une pluralité de touffes de poils (16-40 ; 52-62), qui sont maintenues au niveau de leurs extrémités inférieures par l'élément support (34), **caractérisé en ce que** deux des touffes de poils (60, 62, 20, 56, 58) sont adjacentes au niveau de leurs extrémités inférieures et sont inclinées à l'opposé l'une de l'autre selon un angle aigu par rapport à l'élément support (34), dans lequel la deuxième des deux touffes de poils adjacentes (60, 62) est inclinée dans la direction tangentielle le long d'une ligne périphérique projetée, qui entoure le milieu de la surface circulaire et passe par une extrémité inférieure côté fixation de la touffe de poils (60, 62) et dans lequel au moins une des deux touffes de poils adjacentes (60, 62) présente une section transversale non ronde et dans lequel la première touffe de poils (20, 56, 58) est inclinée le long d'un rayon projeté, qui part d'un centre de la surface circulaire et passe par l'extrémité inférieure de la première touffe de poils.

2. Élément tête selon la revendication 1, dans lequel dans la pluralité de touffes de poils (16-40 ; 52-62), une autre touffe de poils (18) est présente, qui se différencie en section transversale des deux touffes de poils adjacentes (24 ; 60, 62) et présente une section transversale de préférence triangulaire et des coins arrondis.

3. Élément tête (14, 50) selon une des revendications précédentes, dans lequel l'élément support présente une surface circulaire, à partir de laquelle les touffes de poils (16-40 ; 52-62) font saillie, dans lequel une première touffe de poils (20 ; 56, 58) est inclinée vers l'extérieur le long d'un rayon projeté, qui part d'un centre de la surface circulaire et passe par l'extrémité inférieure de la première touffe de poils.

4. Élément tête selon la revendication 3, dans lequel l'extrémité inférieure de la première touffe de poils (58) est plus proche du centre de la surface circulaire qu'une extrémité inférieure de la deuxième touffe de poils (60, 62).

5. Élément tête selon une des revendications précédentes, dans lequel deux touffes de poils sont inclinées selon des angles différents par rapport à la surface circulaire.

6. Élément tête selon une des revendications précédentes, dans lequel au moins une des touffes de poils présente une section transversale non ronde, de préférence essentiellement ovale.

7. Élément tête selon une des revendications précédentes, dans lequel la longueur de la première touffe de poils se différencie de celle de la deuxième touffe de poils.

8. Élément tête selon une des revendications précédentes, comprenant une troisième touffe de poils, qui est disposée inclinée par rapport à l'élément support (34) et dont la longueur se différencie de celle des première et deuxième touffes de poils.

9. Élément tête selon une des revendications précédentes, dans lequel le nombre de poils de la première touffe de poils est différent de celui de la deuxième touffe de poils.

10. Élément tête selon une des revendications précédentes, dans lequel la première et la deuxième touffe de poils sont de longueurs différentes.

11. Élément tête selon une des revendications précédentes, comprenant une troisième touffe de poils, dont l'angle d'inclinaison se différencie de celui des première et deuxième touffes de poils.

12. Élément tête selon une des revendications précédentes, comprenant au moins une touffe de poils, dont la section transversale est formée non arrondie.

13. Élément tête selon la revendication 12, dans lequel la touffe de poils présente une section transversale ovale.

14. Élément tête selon une des revendications précédentes, dans lequel les deux touffes de poils se différencient l'une de l'autre par au moins une caractéristique choisie dans le groupe de caractéristiques constitué par la longueur, la forme de section transversale, la couleur, la composition du matériau, le nombre de filaments, le type d'extrusion et l'angle d'inclinaison.

15. Élément tête selon une des revendications précédentes, dans lequel une deuxième touffe de poils présente une section transversale ronde.

16. Élément tête selon la revendication 15, dans lequel la touffe de poils de forme ronde est disposée verticalement par rapport à une surface de l'élément tête, à partir de laquelle elle fait saillie et l'autre touffe de poils est orientée selon un angle aigu par rapport à cette surface.

17. Élément tête selon une des revendications précédentes, comprenant une troisième touffe de poils, dans lequel les trois touffes de poils présentent des longueurs différentes, qui se trouvent dans la plage d'environ 6,7 mm à environ 8,6 mm.

18. Élément tête selon une des revendications précédentes, dans lequel au moins quelques-uns des poils présentent un diamètre compris entre environ 0,14 mm (5,5 mil) et environ 0,16 mm (6,5 mil).
